# FASCICULE DE BREVET EUROPEEN

(11) **EP 4 375 623 B1**
(45) Date de publication et mention de la délivrance du brevet: **11.12.2024**
(21) Numéro de dépôt: 23211649.1
(22) Date de dépôt: 23.11.2023
(51) Int. Cl.: G01F 15/00, G01F 1/66

(54) **COMPTEUR DE FLUIDE À ALIMENTATION ALTERNATIVE**
FLÜSSIGKEITSZÄHLER MIT ALTERNATIVER ENERGIEVERSORGUNG
FLUID METER WITH ALTERNATIVE POWER SUPPLY

(30) Priorité: 23.11.2022 FR 2212218
(43) Date de publication de la demande: 29.05.2024
(73) Titulaire: SAGEMCOM ENERGY & TELECOM SAS, 92270 Bois-Colombes (FR)
(72) Inventeur: TEBOULLE, Henri, 92270 Bois-Colombes (FR)
(74) Mandataire: Regimbeau

(56) Documents cités:
- WO-A1-2015/150247
- CN-U- 204 043 740
- US-B2- 8 299 937
- WANG HAO ET AL: "Development of a Digital and Battery-Free Smart Flowmeter", ENERGIES, vol. 7, no. 6, 16 June 2014 (2014-06-16), pages 3695 - 3709, XP055622696, DOI: 10.3390/en7063695

## Description

### Domaine technique

L'invention appartient au domaine technique des compteurs de fluide. Un compteur de fluide est un appareil de métrologie configuré pour effectuer des mesures métrologiques dans une canalisation de circulation de fluide. Le fluide peut être liquide, comme par exemple de l'eau ou du pétrole, ou gazeux, comme par exemple un mélange gazeux d'hydrocarbures constitué principalement de méthane tel que le gaz naturel. Les mesures métrologiques sont généralement un volume ou un débit relatif au fluide circulant dans la canalisation.

### Arrière-plan technologique

Afin de connaître certaines données métrologiques concernant la circulation d'un fluide dans une canalisation, un compteur de fluide est habituellement utilisé pour générer et rendre disponibles des mesures métrologiques. Afin de relever ces mesures métrologiques, des compteurs de fluide munis de moyens de communication d'informations relatives auxdites données métrologiques ont été développés. Ces moyens de communication peuvent être adaptés pour une communication à distance, et par exemple permettent une transmission filaire ou non de ces informations. Les moyens de communication peuvent également présenter plusieurs informations dans un affichage, organisées selon des menus. Dans tous les cas, ces compteurs métrologiques nécessitent une alimentation électrique. Or, les compteurs peuvent être disposés dans des emplacements ne permettant pas un raccordement aisé au réseau électrique, de sorte qu'ils doivent disposer d'une alimentation électrique autonome, non raccordée au réseau électrique.

La façon la plus simple d'alimenter en électricité de façon autonome un compteur de fluide est de munir celui-ci d'une pile électrique, c'est-à-dire d'un élément de stockage d'énergie non rechargeable in-situ. La capacité de stockage d'énergie doit cependant être suffisante pour permettre une alimentation électrique pendant une longue durée (typiquement 20 ans), ce qui se traduit par l'emploi de piles très volumineuses. En outre, la durée de vie de la pile dépend de la consommation électrique du compteur, qui peut singulièrement réduire la durée de vie de la pile, laquelle de toute façon finit par s'épuiser et doit être changée, opération fastidieuse nécessitant une surveillance de l'état de la pile.

Afin de pallier ces inconvénients, il a été proposé de remplacer la pile électrique par une batterie rechargeable, par exemple alimentée par un générateur électrique configuré pour être entraîné par la circulation du fluide dans la canalisation et générer de l'électricité rechargeant la batterie.

Toutefois, l'aspect potentiellement intermittent de la circulation du fluide nécessite de disposer d'une batterie avec une capacité de stockage électrique importante, ce qui se traduit par un encombrement et des coûts élevés. En outre, la non régularité des épisodes de circulation de fluide peut multiplier les cycles de charge-décharge incomplet de la batterie, réduisant au cours du temps les performances de celle-ci.

La demande de brevet WO2015150247 décrit un procédé de fonctionnement d'un dispositif électronique porté par un appareil et appareil muni d'une turbine apte à être entraînée en rotation par un flux d'un fluide et d'un moyen de détection d'au moins une position angulaire déterminée de ladite turbine, délivrant une impulsion électrique à chaque fois que la turbine passe par cette position angulaire. Un compteur d'impulsions peut compter les impulsions délivrées. Un générateur de courant électrique peut alimenter le dispositif électronique. Un accumulateur d'énergie électrique peut être chargé par le générateur de courant et alimenter le dispositif électronique. Toutefois, cet accumulateur électrique ne fonctionne que lorsque sa charge reste suffisante. Afin de disposer d'une alimentation pendant l'arrêt de la turbine, l'accumulateur peut être remplacé par une pile, dont la taille devra être d'autant plus importante que les périodes d'arrêts sont fréquentes ou prolongées.

### Présentation de l'invention

L'invention vise donc à proposer un compteur de fluide muni d'une alimentation électrique avec une longue durée de vie, moins encombrante et plus fiable.

A cet effet, l'invention propose un compteur de fluide configuré pour effectuer des mesures métrologiques dans une canalisation de circulation de fluide et pour communiquer des informations relatives auxdites données métrologiques, comprenant :
- un générateur électrique configuré pour être entraîné par la circulation du fluide dans la canalisation de fluide et générer de l'électricité,
- au moins un capteur métrologique configuré pour effectuer des mesures métrologiques dans la canalisation de fluide,
- un bloc de commande configuré pour recevoir les mesures métrologiques et pour communiquer des informations relatives auxdites données métrologiques,
- un bloc d'alimentation couplé au générateur électrique, et configuré pour alimenter en énergie le bloc de commande, dans lequel le bloc d'alimentation comprend une première voie d'alimentation comprenant au moins une pile, et une seconde voie d'alimentation reliée au générateur électrique, la seconde voie d'alimentation comprenant un condensateur et un premier commutateur configuré pour sélectivement coupler le condensateur et le générateur électrique, le bloc d'alimentation comprenant en outre un second commutateur configuré pour coupler sélectivement la première voie d'alimentation ou la seconde voie d'alimentation au bloc de commande,

le bloc d'alimentation comprenant en outre un capteur de courant configuré pour déterminer une mesure de courant représentative d'une intensité d'un courant de charge ou de décharge du condensateur,
le premier commutateur et le second commutateur étant configurés pour être contrôlés par le bloc de commande en fonction d'un état de charge du condensateur déterminé par le bloc de commande à partir de la mesure de courant.

Grâce à l'alimentation alternativement assurée par la première voie d'alimentation et la seconde voie d'alimentation, il est possible de fournir en permanence de l'électricité au bloc de commande tout en ne requérant qu'une pile de faible capacité de stockage, moins encombrante, moins onéreuse, avec une durée de vie prolongée.

De préférence, afin de privilégier l'alimentation par le condensateur, le bloc de commande est configuré pour, au moins lorsque le générateur électrique génère de l'électricité, : a) ouvrir le premier commutateur et positionner le second commutateur sur la seconde voie d'alimentation lorsque l'état de charge devient supérieur à un seuil haut, et b) fermer le premier commutateur et positionner le second commutateur sur la première voie d'alimentation lorsque l'état de charge du condensateur devient inférieur à un seuil bas.

L'invention est avantageusement complétée par les différentes caractéristiques suivantes prises seules ou selon leurs différentes combinaisons possibles :
- le seuil haut est supérieur ou égal à 80% d'un état de charge maximal, et le seuil bas est inférieur ou égal à 10% d'un état de charge maximal ;
- le bloc de commande est configuré pour mettre à jour un état de charge précédent avec un multiple d'un carré de l'intensité du courant à chaque pas de temps ;
- le bloc de commande est configuré pour mettre à jour à chaque pas de temps un état de charge précédent avec un produit de l'intensité du courant et de la tension entre un premier terminal du condensateur entre le premier commutateur et le second commutateur et le potentiel de référence, ladite tension décrémentée de la tension aux bornes de la résistance par l'intensité du courant ;
- l'état de charge est exprimé en tant que proportion d'une réserve d'énergie maximale du condensateur ;
- le compteur comprend une résistance en série entre le condensateur et une tension de référence, et la mesure du courant est déterminée à partir d'une tension aux bornes de la résistance ;
- le condensateur a un terminal couplé à une borne du premier commutateur et à une borne du second commutateur ;
- la communication des informations relatives aux données métrologiques est effectuée par affichage sur un écran et/ou par transmission desdites données métrologiques ;
- la première voie d'alimentation et la seconde voie d'alimentation sont indépendantes ;
- la pile est un élément de stockage d'énergie électrique qui ne peut pas être rechargée, ou dont la configuration dans le bloc d'alimentation rend impossible la charge au sein de ce bloc d'alimentation.

### Présentation des figures

D'autres caractéristiques, buts et avantages de l'invention ressortiront de la description qui suit, qui est purement illustrative et non limitative, et qui doit être lue en regard des dessins annexés sur lesquels :
- la figure 1 est une vue d'ensemble schématique d'un compteur de fluide selon un mode de réalisation possible de l'invention ;
- la figure 2 est un diagramme de mise en oeuvre d'un compteur de fluide selon un mode de réalisation possible de l'invention.

### Description détaillée

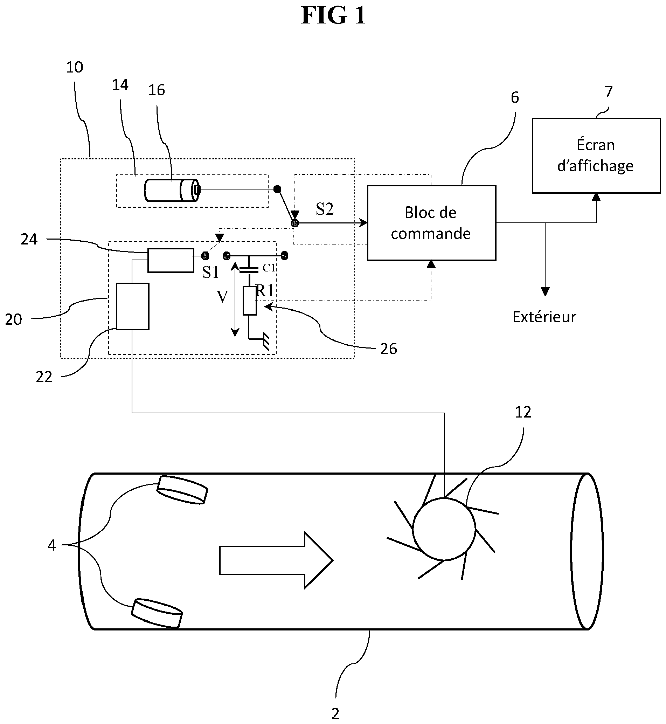

La figure 1 montre un compteur de fluide configuré pour effectuer des mesures métrologiques dans une canalisation 2 de circulation de fluide et pour communiquer des informations relatives auxdites données métrologiques. Typiquement, la canalisation 2 de circulation de fluide fait partie du compteur de fluide au sens où le compteur de fluide comprend une portion de conduite dans laquelle circule le fluide, qui est intégrée au réseau de circulation du fluide. Pour effectuer des mesures métrologiques, le compteur de fluide comprend au moins un capteur métrologique 4 configuré pour effectuer des mesures métrologiques dans la canalisation de fluide 2. Le capteur métrologique 4 est de préférence disposé dans la canalisation de fluide 2. Le type de capteur métrologique 4 dépend de la technologie utilisée pour effectuer les mesures, qui peut être une technologie ultrasonore, électromagnétique, thermique ou à effet Coriolis. Dans l'exemple illustré, deux transducteurs ultrasonores sont disposés l'un en face de l'autre dans la canalisation afin de procéder à des mesures métrologiques par ultrasons, de façon connue. Les mesures métrologiques sont généralement un volume ou un débit relatifs au fluide circulant dans la canalisation 2, dérivées des données récoltées par le ou les capteurs métrologiques 4.

Le compteur de fluide comprend un bloc de commande 6 comprenant au moins un processeur et une mémoire, et qui est configuré pour recevoir les mesures métrologiques en provenance du capteur métrologique 4, et pour communiquer les informations relatives auxdites données métrologiques. Typiquement, le capteur métrologique 4 peut être relié au bloc de commande 6, par exemple par une liaison filaire, et transmet les mesures métrologiques au bloc de commande 6.

La communication des informations relatives aux données métrologiques est effectuée par affichage sur un écran et/ou par transmission. Le compteur de fluide peut disposer d'un écran d'affichage 7 où peuvent être affichées les informations relatives aux données métrologiques. Le compteur de fluide peut être muni d'une interface homme-machine tel qu'un bouton permettant de causer l'affichage de ces informations relatives aux données métrologiques, et éventuellement de faire varier cet affichage, par exemple en permettant d'en faire défiler différents types sur l'écran d'affichage 7. Les informations relatives aux données métrologiques peuvent être transmises à l'extérieur du compteur de fluide, de préférence par une liaison non filaire, auquel cas le compteur de fluide peut comprendre une antenne et tout autre élément connu permettant d'établir une communication à distance avec le compteur de fluide.

De préférence, le compteur de fluide est conforme à la directive de l'Union Européenne 2014/32/EU concernant les instruments de mesure, plus connu sous l'acronyme anglais de MID pour « Measuring Instruments Directive ». En particulier, le compteur de fluide doit pouvoir en permanence être capable de communiquer des informations relatives aux données métrologiques. De même, le compteur de fluide doit pouvoir à tout moment permettre de procéder aux mesures métrologiques. Par conséquent, le compteur de fluide doit disposer en permanence d'une alimentation électrique.

A cet effet, le compteur de fluide comprend un bloc d'alimentation 10 configuré pour alimenter en permanence en électricité le bloc de commande 6, et un générateur électrique 12 configuré pour être entraîné par la circulation du fluide dans la canalisation et générer de l'électricité, le bloc d'alimentation 10 étant couplé au générateur électrique 12.

Au moins une partie de générateur électrique 12 est disposé dans la canalisation 2 au contact du fluide afin de prélever une énergie mécanique et de la convertir en électricité. Typiquement, ce générateur électrique 12 est une turbine, de préférence à ailettes, intégrant un rotor et un stator. Le générateur électrique 12 fournit de l'électricité disponible à l'extérieur de la canalisation. De préférence, le générateur électrique 12 est disposé en aval, dans le sens de circulation du fluide, par rapport au capteur métrologique 4 dans la canalisation de fluide, afin de ne pas perturber ces mesures métrologiques.

Le bloc d'alimentation 10 comprend deux voies distinctes et indépendantes : une première voie d'alimentation 14 comprenant au moins une pile 16 et une seconde voie d'alimentation 20 reliée au générateur électrique 12. On entend par pile (ou « primary cell » en anglais) un élément de stockage d'énergie électrique qui ne peut pas être rechargée, ou dont la configuration dans le bloc d'alimentation 10 rend impossible la charge au sein de ce bloc d'alimentation 10. Typiquement, la première voie d'alimentation 14 comprend uniquement la pile 16. La pile 16 présente de préférence une réserve d'énergie maximale inférieure à 100 Wh, comme par exemple 30,6 Wh (8,5 Ah sur 3,6 V) ou 68,4 Wh (19 Ah sur 3,6 V).

La seconde voie d'alimentation 20 comprend un condensateur C1 et un premier commutateur S1 configuré pour sélectivement coupler ou découpler le condensateur C1 et le générateur électrique 12. Le condensateur C1 présente de préférence une réserve d'énergie maximale Eₘₐₓ supérieure ou égale à 0.5 Wh, et de préférence encore supérieure ou égale à 0.8 Wh. Par exemple, le condensateur C1 peut délivrer une charge électrique de 0.222 Ah sur 3.6 V. Le condensateur C1 est de préférence un supercondensateur. Typiquement, le condensateur C1 peut être un supercondensateur à couche hybride, ou HLC pour l'anglais « Hybrid Layer Capacitor », mais peut également être tout type de supercondensateur permettant d'offrir une réserve d'énergie maximale Eₘₐₓ supérieure ou égale à 0.5 Wh. De préférence, l'énergie maximale Eₘₐₓ du condensateur C1 est inférieure d'au moins 20 fois à l'énergie maximale de la pile 16.

Le premier commutateur S1 est disposé entre le condensateur C1 et le générateur électrique 12. Le premier commutateur S1 est commandé par le bloc de commande 6 pour son ouverture et sa fermeture. Le premier commutateur S1 est de préférence un relais, par exemple un relais électromécanique.

La seconde voie d'alimentation 20 peut comprendre, en série entre le générateur électrique 12 et le premier commutateur S1, différents éléments de mise en forme du courant, et par exemple un redresseur 22 en série avec un régulateur de tension 24. Le bloc d'alimentation 10 comprend en outre un capteur de courant 26 configuré pour déterminer une mesure de courant représentative d'une intensité du courant de charge ou de décharge du condensateur C1. Dans l'exemple illustré, un premier terminal du condensateur C1 est raccordé entre le premier commutateur S1 et le second commutateur S2 (en ce point de raccordement, on considère que la tension V entre ledit point de raccordement et le potentiel de référence auquel est relié la résistance R1 est connue par conception), et un second terminal du condensateur C1 est connecté en série avec une borne de la résistance R1, laquelle est reliée à un potentiel de référence (e.g. la masse) par son autre borne. Une mesure relative au courant traversant la résistance R1 est relevée par le capteur de courant 26, typiquement une tension Vᵣ aux bornes de la résistance R1 dont peut être dérivée une mesure de courant I signé (positif lors de la charge et négatif lors de la décharge) dès lors que la valeur de résistance de la résistance R1 est connue. Ainsi, le capteur de courant 26 peut être un voltmètre. La valeur de résistance de la résistance R1 peut être faible, et est par exemple inférieure à 800 mΩ.

Le capteur de courant 26 transmet sa mesure au bloc de commande 6. De préférence, la mesure de courant est une moyenne des valeurs d'intensité relevées pendant une période de temps, typiquement pendant un pas de temps.

Le bloc d'alimentation 10 comprend en outre un second commutateur S2 configuré pour coupler sélectivement la première voie d'alimentation 14 ou la seconde voie d'alimentation 20 au bloc de commande 6, sélectionnant ainsi si le bloc de commande 6 est alimenté électriquement par la première voie d'alimentation 14 ou la seconde voie d'alimentation 20.

Le premier commutateur S1 et le second commutateur S2 sont commandés par le bloc de commande 6 pour leur état : ouvert ou fermé pour le premier commutateur S1, sélection de la voie d'alimentation pour le second commutateur S2. Lorsque le premier commutateur S1 est fermé est que le second commutateur S2 connecte le bloc de commande 6 à la pile 16, qui alimente alors le bloc de commande 6, le condensateur C1 est couplé au générateur électrique 12 et se recharge, emmagasinant de l'énergie électrique. Lorsque le premier commutateur S1 est ouvert est que le second commutateur S2 connecte le bloc de commande 6 au condensateur C1 de la seconde voie d'alimentation 20, le bloc de commande 6 est alimenté par le condensateur C1, la pile 16 n'étant pas sollicitée.

Le premier commutateur S1 et le second commutateur S2 sont configurés pour être contrôlés par le bloc de commande 6 en fonction d'un état de charge du condensateur C1 déterminé par le bloc de commande 6 à partir de la mesure de courant. Le bloc de commande 6 est en effet configuré pour déterminer un état de charge (SoC) du condensateur C1 à partir de la mesure du courant. Plus précisément, l'état de charge est mis à jour à chaque pas de temps grâce à la mesure du courant. Par exemple, lors de la charge du condensateur C1, l'état de charge (SoC) à l'instant précédent est incrémenté par un multiple du carré de l'intensité du courant, plus précisément par le produit de l'intensité du courant I et de la tension V décrémentée de la tension aux bornes de la résistance R1 par l'intensité du courant.

De préférence, l'état de charge est exprimé en tant que proportion d'une réserve d'énergie maximale Eₘₐₓ du condensateur C1. Il s'ensuit que l'expression de l'énergie, soit (V-R₁.I).I, est divisée par Eₘₐₓ, avec R1 la valeur de résistance de la résistance R1, et donc que SoC(t+T)= SoC(t)+T.((V-R₁.I).I/Eₘₐₓ. Lors de la décharge du condensateur C1, l'état de charge (SoC) à l'instant précédent est décrémenté par un multiple du carré du courant, soit incrémenté par le produit de l'intensité du courant et de la tension V décrémentée de la tension aux bornes de la résistance R1 (qui est négative en l'occurrence) par l'intensité du courant (négative également), d'où SoC(t+T)= SoC(t)+T.(V-R₁.I).I/Eₘₐₓ. De préférence, le pas de temps T est inférieur à 10 secondes. Le pas de temps T est de préférence supérieur à 0,1 seconde. Pour des raisons de simplicité, le pas de temps est ici de 1 seconde, ce qui permet de simplifier la détermination de l'état de charge :
- en charge : SoC(t+T)= SoC(t)+(V-R₁.I).I/Eₘₐₓ,
- en décharge : SoC(t+T)= SoC(t)+(V-R₁.I).I/Eₘₐₓ.

Si l'état de charge est suffisamment haut, le second commutateur S2 connecte la seconde voie d'alimentation 20 pour permettre l'alimentation du bloc de commande 6 par le condensateur C1 de la seconde voie d'alimentation 20. Sinon, le second commutateur S2 connecte la première voie d'alimentation 14 pour permettre la recharge du condensateur C1 pendant que c'est la pile 16 de la première voie d'alimentation 14 qui alimente le bloc de commande 6. Le bloc de commande 6 est configuré pour, au moins lorsque le générateur électrique 12 génère de l'électricité :
- ouvrir le premier commutateur S1 et positionner le second commutateur S2 sur la seconde voie d'alimentation 20 lorsque l'état de charge devient supérieur à un seuil haut,
- fermer le premier commutateur S1 et positionner le second commutateur S2 sur la première voie d'alimentation 14 lorsque l'état de charge du condensateur C1 devient inférieur à un seuil bas.

L'estimation de l'état de charge à partir de la mesure de courant est plus précise que d'autres approches, par exemple fondée sur la tension aux bornes du condensateur C1, et permet donc d'exploiter au mieux les capacités de stockage du condensateur C1.

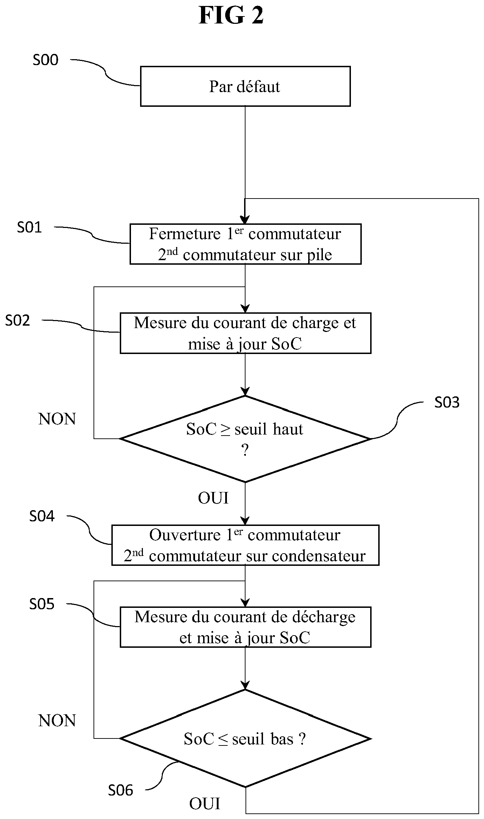

La figure 2 montre un exemple de diagramme de fonctionnement du compteur de fluide montrant les variations des états du premier commutateur S1 et du second commutateur S2, avec différentes étapes mises en oeuvre par le bloc de commande 6. Dans un état par défaut (S00), par exemple avant la mise en place du compteur de fluide, le second commutateur S2 est sur pile 16, c'est-à-dire connecte le bloc de commande 6 à la première voie d'alimentation 14. Le premier commutateur S1 est de préférence fermé. La charge du condensateur C1 peut être nulle ou très faible. L'état par défaut peut par exemple être maintenu jusqu'à ce qu'un courant de charge non nul soit détecté par le capteur de courant 26.

Dans une première étape (S01), le premier commutateur S1 est fermé, connectant le condensateur C1 au générateur d'électricité. Le second commutateur S2 est sur pile 16. Le condensateur C1 peut alors se charger en énergie électrique. Dans une deuxième étape (S02), le courant de charge est mesuré via le capteur de courant 26, et l'état de charge est mis à jour en fonction de la mesure du courant de charge. Plus précisément, comme expliqué plus haut, l'état de charge est incrémenté par un multiple du carré de l'intensité du courant de charge. Ensuite, un test (S03) est effectué pour vérifier si l'état de charge est supérieur à un seuil haut, au moyen d'une comparaison entre l'état de charge courant et ce seuil haut. Le seuil haut sert à vérifier que le condensateur C1 est suffisamment chargé, et correspond donc à un état de charge proche de l'énergie maximale Eₘₐₓ que peut stocker le condensateur. Typiquement, le seuil haut est d'au moins 80% de l'énergie maximale Eₘₐₓ, et de préférence d'au moins 90% de l'énergie maximale Eₘₐₓ.

Si ce n'est pas le cas, le bloc de commande 6 revient à la deuxième étape (S02) pour continuer la charge du condensateur C1. Si l'état de charge est supérieur au seuil haut, alors le bloc de commande 6 commande l'ouverture du premier commutateur S1 et le passage du second commutateur S2 sur le condensateur C1, couplant ainsi le bloc de commande 6 et la seconde voie d'alimentation 20. Le bloc de commande 6 est désormais alimenté par le condensateur C1 qui se décharge, et non plus par la pile 16. L'ouverture du premier commutateur S1 permet de découpler le condensateur C1 et le générateur électrique 12, évitant ainsi d'éventuelles perturbations électriques. Lors de la décharge du condensateur C1, à chaque pas de temps est effectuée une étape (S05) de mesure du courant de décharge et une mise à jour de l'état de charge. Plus précisément, comme expliqué plus haut, l'état de charge est décrémenté par un multiple du carré de l'intensité du courant de décharge. Ensuite, un test (S06) est effectué pour vérifier si l'état de charge est inférieur à un seuil bas, au moyen d'une comparaison entre l'état de charge courant et ce seuil bas. Le seuil bas sert à vérifier que le condensateur C1 a suffisamment été déchargé, et correspond donc à un état de charge proche du minimum. Typiquement, le seuil bas est inférieur à 10% de l'énergie maximale Eₘₐₓ, et est par exemple inférieur ou égal à 5% de Eₘₐₓ.

Si l'état de charge est supérieur au seuil bas, la décharge du condensateur C1 se poursuit et une nouvelle étape (S05) de mesure du courant de décharge et de mise à jour de l'état de charge est effectuée. Si l'état de charge est inférieur ou égal au seuil bas, cela signifie que le condensateur C1 a été suffisamment déchargé, et qu'il doit maintenant être rechargé. Par conséquent, le bloc de commande 6 retourne alors à l'étape (S01), ferme le premier commutateur S1 et commute le second commutateur S2 vers la première voie d'alimentation 14, sur la pile 16.

Ainsi que visible dans ce procédé, le bloc de commande 6 est configuré pour maximiser l'utilisation du condensateur C1 et économiser la pile 16. La pile 16 n'est alors utilisée que pour permettre la recharge du condensateur C1. Grâce à la permanence de l'alimentation électrique, le compteur de fluide est capable de communiquer des informations relatives aux données métrologiques, par exemple en les affichant, même en l'absence de circulation de fluide. Il est à noter que le temps de charge du condensateur C1 est inversement proportionnel à la vitesse de rotation de la turbine. Il est aisé de faire en sorte, eu égard aux faibles besoin énergétiques du bloc de commande 6, que le temps de recharge du condensateur C1 soit beaucoup plus court que le temps de décharge du condensateur C1. Le condensateur C1 peut assurer une part significative de l'alimentation du bloc de commande 6. La pile 16, moins sollicitée, peut être choisie avec une capacité de stockage énergétique moindre, avec par conséquent un encombrement réduit et un coût moins important, tout en préservant ou augmentant sa durée de vie.

L'invention n'est pas limitée au mode de réalisation décrit et représenté aux figures annexées. Des modifications restent possibles, notamment du point de vue de la constitution des diverses caractéristiques techniques ou par substitution d'équivalents techniques, sans sortir pour autant du domaine de protection de l'invention.

## Revendications

1. Compteur de fluide configuré pour effectuer des mesures métrologiques dans une canalisation de circulation de fluide et pour communiquer des informations relatives auxdites données métrologiques, comprenant :
- un générateur électrique (12) configuré pour être entraîné par la circulation du fluide dans la canalisation de fluide (2) et générer de l'électricité,
- au moins un capteur métrologique (4) configuré pour effectuer des mesures métrologiques dans la canalisation de fluide (2),
- un bloc de commande (6) configuré pour recevoir les mesures métrologiques et pour communiquer des informations relatives auxdites données métrologiques,
- un bloc d'alimentation (10) couplé au générateur électrique (12), et configuré pour alimenter en énergie le bloc de commande (6), dans lequel le bloc d'alimentation (10) comprend une première voie d'alimentation (14) comprenant au moins une pile (16), et une seconde voie d'alimentation (20) reliée au générateur électrique (12), la seconde voie d'alimentation (20) comprenant un condensateur (C1) et un premier commutateur (S1) configuré pour sélectivement coupler le condensateur (C1) et le générateur électrique (12), le bloc d'alimentation (10) comprenant en outre un second commutateur (S2) configuré pour coupler sélectivement la première voie d'alimentation (14) ou la seconde voie d'alimentation (20) au bloc de commande (6),
le bloc d'alimentation (10) comprenant en outre un capteur de courant (26) configuré pour déterminer une mesure de courant représentative d'une intensité d'un courant de charge ou de décharge du condensateur (C1),
le premier commutateur (S 1) et le second commutateur (S2) étant configurés pour être contrôlés par le bloc de commande (6) en fonction d'un état de charge du condensateur (C1) déterminé par le bloc de commande (6) à partir de la mesure de courant.

2. Compteur de fluide selon la revendication 1, dans lequel le bloc de commande (6) est configuré pour, au moins lorsque le générateur électrique (12) génère de l'électricité, :
- ouvrir le premier commutateur (S1) et positionner le second commutateur (S2) sur la seconde voie d'alimentation (20) lorsque l'état de charge devient supérieur à un seuil haut,
- fermer le premier commutateur (S1) et positionner le second commutateur (S2) sur la première voie d'alimentation (14) lorsque l'état de charge du condensateur (C1) devient inférieur à un seuil bas.

3. Compteur de fluide selon la revendication 2, dans lequel le seuil haut est supérieur ou égal à 80% d'un état de charge maximal, et le seuil bas est inférieur ou égal à 10% d'un état de charge maximal.

4. Compteur de fluide selon l'une quelconque des revendications précédentes, dans lequel le bloc de commande (6) est configuré pour mettre à jour un état de charge précédent avec un multiple d'un carré de l'intensité du courant à chaque pas de temps.

5. Compteur de fluide selon l'une quelconque des revendications précédentes, dans lequel l'état de charge est exprimé en tant que proportion d'une réserve d'énergie maximale du condensateur (C1).

6. Compteur de fluide selon l'une quelconque des revendications précédentes, comprenant une résistance (R1) en série entre le condensateur (C1) et une tension de référence, et la mesure du courant est déterminée à partir d'une tension aux bornes de la résistance (R1).

7. Compteur de fluide selon la revendication 6, dans lequel le bloc de commande (6) est configuré pour mettre à jour à chaque pas de temps un état de charge précédent avec un produit de l'intensité du courant et de la tension (V) entre un premier terminal du condensateur (C1) entre le premier commutateur (S1) et le second commutateur (S2) et le potentiel de référence, ladite tension décrémentée de la tension aux bornes de la résistance (R1) par l'intensité du courant.

8. Compteur de fluide selon l'une quelconque des revendications précédentes, dans lequel le condensateur (C1) a un terminal couplé à une borne du premier commutateur (S1) et à une borne du second commutateur (S2).

9. Compteur de fluide selon l'une quelconque des revendications précédentes, dans lequel la communication des informations relatives aux données métrologiques est effectuée par affichage sur un écran et/ou par transmission desdites données métrologiques.

10. Compteur de fluide selon l'une quelconque des revendications précédentes, dans lequel la première voie d'alimentation (14) et la seconde voie d'alimentation (20) sont indépendantes.

11. Compteur de fluide selon l'une quelconque des revendications précédentes, dans lequel la pile (16) est un élément de stockage d'énergie électrique qui ne peut pas être rechargée, ou dont la configuration dans le bloc d'alimentation (10) rend impossible la charge au sein de ce bloc d'alimentation (10).

## Patentansprüche

1. Fluidzähler, der dazu konfiguriert ist, messtechnische Messungen in einer Fluidzirkulationsleitung durchzuführen und Informationen im Zusammenhang mit den messtechnischen Daten zu übermitteln, umfassend:
- einen Stromgenerator (12), der dazu konfiguriert ist, durch die Zirkulation des Fluids in der Fluidleitung (2) angetrieben zu werden und Strom zu erzeugen,
- mindestens einen messtechnischen Sensor (4), der dazu konfiguriert ist, messtechnische Messungen in der Fluidleitung (2) durchzuführen,
- einen Steuerblock (6), der dazu konfiguriert ist, messtechnische Messungen zu empfangen und Informationen im Zusammenhang mit den messtechnischen Daten zu übermitteln,
- einen Stromversorgungsblock (10), der mit dem Stromgenerator (12) gekoppelt und dazu konfiguriert ist, den Steuerblock (6) mit Strom zu versorgen, wobei der Stromversorgungsblock (10) einen ersten Stromversorgungspfad (14), der mindestens eine Batterie (16) umfasst, und einen zweiten Stromversorgungspfad (20) umfasst, der mit dem Stromgenerator (12) verbunden ist, wobei der zweite Stromversorgungspfad (20) einen Kondensator (C1) und einen ersten Schalter (S1) umfasst, der dazu konfiguriert ist, den Kondensator (C1) und den Stromgenerator (12) selektiv zu koppeln, wobei der Stromversorgungsblock (10) ferner einen zweiten Schalter (S2) umfasst, der dazu konfiguriert ist, den ersten Stromversorgungspfad (14) oder den zweiten Stromversorgungspfad (20) mit dem Steuerblock (6) selektiv zu koppeln,
wobei der Stromversorgungsblock (10) ferner einen Stromsensor (26) umfasst, der dazu konfiguriert ist, eine Strommessung zu bestimmen, die eine Starke eines Lade- oder Entladestroms des Kondensators (C1) darstellt,
wobei der erste Schalter (S1) und der zweite Schalter (S2) dazu konfiguriert sind, vom Steuerblock (6) in Abhängigkeit von einem Ladezustand des Kondensators (C1) gesteuert zu werden, der vom Steuerblock (6) anhand der Strommessung bestimmt wird.

2. Fluidzähler nach Anspruch 1, wobei der Steuerblock (6), zumindest wenn der Stromgenerator (12) Strom erzeugt, für Folgendes konfiguriert ist:
- Öffnen des ersten Schalters (S1) und Positionieren des zweiten Schalters (S2) auf dem zweiten Stromversorgungspfad (20), wenn der Ladezustand größer als ein hoher Schwellenwert wird,
- Schließen des ersten Schalters (S1) und Positionieren des zweiten Schalters (S2) auf dem ersten Stromversorgungspfad (14), wenn der Ladezustand des Kondensators (C1) kleiner als ein niedriger Schwellenwert wird.

3. Fluidzähler nach Anspruch 2, wobei der hohe Schwellenwert größer oder gleich 80 % eines maximalen Ladezustands ist und der niedrige Schwellenwert kleiner oder gleich 10 % eines maximalen Ladezustands ist.

4. Fluidzähler nach einem der vorhergehenden Ansprüche, wobei der Steuerblock (6) dazu konfiguriert ist, einen vorherigen Ladezustand in jedem Zeitschritt um ein Vielfaches eines Quadrats der Stromstärke zu aktualisieren.

5. Fluidzähler nach einem der vorhergehenden Ansprüche, wobei der Ladezustand als Anteil eines maximalen Energiespeichers des Kondensators (C1) ausgedrückt wird.

6. Fluidzähler nach einem der vorhergehenden Ansprüche, der einen Widerstand (R1) in Reihe zwischen dem Kondensator (C1) und einer Referenzspannung umfasst, und wobei die Strommessung anhand der Spannung an den Klemmen des Widerstands (R1) bestimmt wird.

7. Fluidzähler nach Anspruch 6, wobei der Steuerblock (6) dazu konfiguriert ist, einen vorherigen Ladezustand in jedem Zeitschritt mit einem Produkt aus der Stromstärke und der Spannung (V) zwischen einem ersten Anschluss des Kondensators (C1) zwischen dem ersten Schalter (S1) und dem zweiten Schalter (S2) und dem Referenzpotenzial zu aktualisieren, wobei die Spannung durch die Stromstärke von der Spannung an den Klemmen des Widerstands (R1) dekrementiert wird.

8. Fluidzähler nach einem der vorhergehenden Ansprüche, wobei der Kondensator (C) ein Anschluss ist, der mit einer Klemme des ersten Schalters (S1) und mit einer Klemme des zweiten Schalters (S2) gekoppelt ist.

9. Fluidzähler nach einem der vorhergehenden Ansprüche, wobei das Übermitteln von Informationen im Zusammenhang mit den messtechnischen Daten durch das Anzeigen auf einem Bildschirm und/oder durch das Übertragen der messtechnischen Daten ausgeführt wird.

10. Fluidzähler nach einem der vorhergehenden Ansprüche, wobei der erste Stromversorgungspfad (14) und der zweite Stromversorgungspfad (20) unabhängig sind.

11. Fluidzähler nach einem der vorhergehenden Ansprüche, wobei die Batterie (16) ein elektrisches Energiespeicherelement ist, das nicht wiederaufgeladen werden kann oder dessen Konfiguration im Stromversorgungsblock (10) das Aufladen innerhalb des Stromversorgungsblocks (10) unmöglich macht.

## Claims

1. A fluid meter configured to perform metrological measurements in a fluid circulation pipe and to communicate information relating to said metrological data, comprising:
- an electrical generator (12) configured to be driven by the circulation of the fluid in the fluid pipe (2) and to generate electricity,
- at least one metrological sensor (4) configured to perform metrological measurements in the fluid pipe (2),
- a control block (6) configured to receive the metrological measurements and to communicate information relating to said metrological data,
- a power supply block (10) coupled to the electrical generator (12), and configured to supply energy to the control block (6), wherein the power supply block (10) comprises a first supply path (14) comprising at least one primary cell (16), and a second supply path (20) connected to the electrical generator (12), the second supply path (20) comprising a capacitor (C1) and a first switch (S1) configured to selectively couple the capacitor (C1) and the electrical generator (12), the power supply block (10) further comprising a second switch (S2) configured to selectively couple the first supply path (14) or the second supply path (20) to the control block (6),
the power supply block (10) further comprising a current sensor (26) configured to determine a current measurement representative of a intensity of a charge or discharge current of the capacitor (C1),
the first switch (S1) and the second switch (S2) being configured to be monitored by the control block (6) as a function of a state of charge of the capacitor (C1) determined by the control block (6) from the current measurement.

2. A fluid meter according to claim 1, wherein the control block (6) is configured to, at least when the electrical generator (12) generates electricity, :
- open the first switch (S1) and position the second switch (S2) on the second supply path (20) when the state of charge becomes greater than a high threshold,
- close the first switch (S1) and position the second switch (S2) on the first supply path (14) when the state of charge of the capacitor (C1) becomes smaller than a low threshold.

3. The fluid meter of claim 2, wherein the high threshold is greater than or equal to 80% of a maximum state of charge, and the low threshold is less than or equal to 10% of a maximum state of charge.

4. A fluid meter according to any one of the preceding claims, wherein the control block (6) is configured to update a previous state of charge with a multiple of a square of the intensity of the current at each time step.

5. A fluid meter according to any one of the preceding claims, wherein the state of charge is expressed as a proportion of a maximum energy reserve of the capacitor (C1).

6. A fluid meter according to any one of the preceding claims, comprising a resistor (R1) in series between the capacitor (C1) and a reference voltage, and the measurement of the current is determined from a voltage across the resistor (R1).

7. A fluid meter according to claim 6, wherein the control block (6) is configured to update at each time step a previous state of charge with a product of the intensity of the current and the voltage (V) between a first terminal of the capacitor (C1) between the first switch (S1) and the second switch (S2) and the reference potential, said voltage being decremented from the voltage across the resistor (R1) by the intensity of the current.

8. A fluid meter according to any one of the preceding claims, wherein the capacitor (C1) has a terminal coupled to a terminal of the first switch (S1) and to a terminal of the second switch (S2).

9. Fluid meter according to any one of the preceding claims, in which the communication of information relating to the metrological data is performed by display on a screen and/or by transmission of said metrological data.

10. A fluid meter according to any one of the preceding claims, wherein the first supply path (14) and the second supply path (20) are independent.

11. A fluid meter according to any one of the preceding claims, wherein the primary cell (16) is an electrical energy storage element that cannot be recharged, or whose configuration in the power supply block (10) makes it impossible to charge within this power supply blocks (10).
